# EUROPEAN PATENT APPLICATION

(11) **EP 4 836 212 A1**
(43) Date of publication of application: **04.11.2026**
(21) Application number: 25173681.5
(22) Date of filing: 30.04.2025
(51) Int. Cl.: H02G 1/12, H02G 1/00

(54) **TOOL POSITION ADJUSTMENT DEVICE FOR A ROTARY CABLE PROCESSING MACHINE, AND ROTARY CABLE PROCESSING MACHINE**

(71) Applicant: Schleuniger AG, 3608 Thun (CH)
(72) Inventor: Deschler, Raphael, 3653 Oberhofen (CH); Bart, Dimitri, 3004 Bern (CH)
(74) Representative: Zimmermann & Partner Patentanwälte mbB

(57) **Abstract**

The present invention concerns a tool position adjustment device (1, 2, 3) for rotary cable processing machines, comprising a first driving wheel (100) and a second driving wheel (200) rotatably-mounted and coaxially arranged along a longitudinal axis (A) that serves as cable processing axis of a rotary cable processing machine, wherein the first driving wheel (100) and the second driving wheel (200) are operatively coupled to each other via a coupling element (300) to form a speed reducer, and wherein said first and second driving wheels (100, 200) are angularly adjustable relative to each other about said longitudinal axis, an adjusting element (600) coaxially arranged along the longitudinal axis and operatively coupled to the coupling element (300) such that a change in the relative angular position between the first driving wheel and the second driving wheel (100, 200) results in an angular position adjustment of the adjusting element (600) and to a first adjustment mechanism (700) adapted to translate angular position adjustments of the adjusting element (600) into positional adjustments of at least one first cable processing tool (500) towards the longitudinal axis (A).

## Description

### Technical Field

The present invention relates to the field of cable processing machines. It is in particular directed to a tool position adjustment device for rotary cable processing machines and to a rotary cable processing machine comprising at least one tool position adjustment device according to the present invention.

### Background of the invention

Cable processing machines are used in various industries for the processing of electrical cables. These machines typically perform a variety of operations such as cutting, stripping, crimping, centering, perforating, flaring, slitting or shaping cables. The operations are performed by various tools that are part of the machine. The positioning of these tools is critical for the accurate processing of the cables.

The tools are generally arranged transversely to the machine's longitudinal axis, which serves as the cable processing axis. They can be moved toward or away from this axis to process the cables, with the movement of the tools typically controlled by a tool position adjustment device.

In WO2020119916A1, the tool adjustment is controlled by two synchronously rotating but angularly adjustable wheels of the cable processing head. The adjustment accuracy of the tools and the cutting force are largely determined by the adjustment angle between the two toothed belt wheels. However, this mechanical principle limits the ratio of the adjustment angle to the tool adjustment distance, which in turn limits the adjustment accuracy and/or the cutting force of the tools.

In other known devices, the adjustment accuracy is mainly restricted due to the fact that the angle adjustment accuracy between the first and second toothed belt wheels is limited for driving motor synchronization reasons, stretching of the belts, mechanical play and deflections of parts.

The present invention aims to overcome these limitations by providing a tool position adjustment device for rotary cable processing machines that increases the ratio of the adjustment angle to the tool adjustment distance.

### Summary of the invention

The present invention addresses the above-mentioned limitations by introducing a novel tool position adjustment device for rotary cable processing machines.

According to the present invention, these objects are achieved in particular through the elements of the independent claims. The invention aims to provide a tool position adjustment device for rotary cable processing machines that increases the ratio of the adjustment angle to the tool adjustment distance, thereby achieving greater accuracy while simultaneously reducing the belt load, especially with greater cutting forces.

In particular, the objects of the present invention are, in a first aspect, achieved by a tool position adjustment device for rotary cable processing machines, comprising a first driving wheel and a second driving wheel rotatably-mounted and coaxially arranged along a longitudinal axis that serves as cable processing axis of a rotary cable processing machine, wherein the first driving wheel and the second driving wheel are operatively coupled to each other via a coupling element to form a speed reducer, and wherein said first and second driving wheels are angularly adjustable relative to each other about said longitudinal axis, comprising further an adjusting element coaxially arranged along the longitudinal axis and operatively coupled to the coupling element such that a change in the relative angular position between the first driving wheel and the second driving wheel results in an angular position adjustment of the adjusting element relative to the first or second driving wheels and to a first adjustment mechanism adapted to translate angular position adjustments of the adjusting element into positional adjustments of at least one first cable processing tool with respects to the longitudinal axis.

The present invention introduces a tool position adjustment device for rotary cable processing machines, featuring a first and second driving wheel, a coupling element forming a speed reducer, and an adjusting element. This innovative configuration facilitates precise control over the positioning of cable processing tools by converting angular adjustments into positional changes. The arrangement of the driving wheels and the coupling element as a speed reducer significantly enhances the ratio of the adjustment angle to the tool adjustment distance, leading to increased accuracy in tool positioning. This precision is crucial for maintaining the quality and consistency of cable processing operations, ensuring that tools are optimally positioned for various tasks such as cutting, stripping, crimping, centering, perforating, flaring, slitting, or shaping cables.

Changes in the relative angular position between the driving wheels result in proportionally small but exact movements of the cable processing tools. This precise adjustment is achieved through the speed reducer, which not only enhances the accuracy of tool positioning but also increases the available torque transmitted to the tools. The increase in torque is approximately proportional to the reduction in speed, allowing the tools to exert greater force during processing operations. This capability is particularly advantageous when dealing with cables that require substantial cutting forces, as it ensures that the tools can perform their tasks effectively without compromising precision. The enhanced torque availability contributes to improved performance and operational efficiency, enabling the machine to handle a wider range of cable processing tasks with greater reliability and consistency. Furthermore, the speed reducing mechanism reduces the necessary torque to the driving wheels. This leads to, when the first and second driving wheel are configured as toothed belt wheels, a reduction in belt load and belt stretching, particularly under high cutting forces, contributing to the extended durability and longevity of machine components, minimizing wear and tear.

The present invention also provides the advantage that deviations of the actual speed values of the first driving wheel and the second driving wheel from their desired speed values are reduced by the reduction ratio of the gear, resulting in more precise control of the tool position. This feature is particularly beneficial in scenarios where perfect synchronization of the driving wheels is challenging to achieve due to mechanical or operational constraints. The coupling element, acting as a speed reducer, ensures that any discrepancies in the angular speeds of the driving wheels are only converted in a reduced form into inaccuracies in tool positioning. This robustness against speed mismatches by the factor of the speed reduction enhances the reliability and stability of the cable processing machine, allowing it to maintain precise tool adjustments even under less-than-ideal conditions. Consequently, the machine can consistently deliver high-quality processing results without being compromised by minor variations in wheel speeds, and thus further improving the overall efficiency and performance of the system.

It is important to note that in all embodiments, the first driving wheel and the second driving wheel are interchangeable.

In a first preferred embodiment of the present invention, the first driving wheel, the second driving wheel and the coupling element are part of a planetary gear train, wherein the first driving wheel is coupled to or configured as a ring gear, the second driving wheel is coupled to a sun gear and the coupling element is configured as a planet gear. The use of a planetary gear train provides a compact and efficient mechanism for adjusting the position of the cable processing tool. The ring gear, sun gear, and planet gear work together to provide a high degree of control over the movement of the tool. The ring gear, which corresponds to or is coupled to the first driving wheel, interacts with the planet gear (the coupling element), which in turn interacts with the sun gear that is operatively coupled to the second driving wheel. This arrangement allows for precise adjustments to be made to the position of the tool.

The use of a planetary gear train also provides a high torque, allowing for precise control over the position of the tool even under high load conditions. This is particularly beneficial in cable processing operations, where the tool may need to exert significant force on the cable.

In another preferred embodiment of the present invention, the first driving wheel, the second driving wheel and the coupling element are part of a cycloidal gear train, wherein the first driving wheel is coupled to or configured as a ring gear, advantageously comprising ring pins or rollers, the second driving wheel is coupled to an eccentric and the coupling element is configured as a cycloidal disc. The use of a cycloidal gear train provides a robust and efficient mechanism for adjusting the position of the cable processing tool. The ring pins or rollers of the first driving wheel interact with the cycloidal disc, or the coupling element, which in turn interacts with the eccentric, operatively coupled to the second driving wheel. This arrangement allows for precise adjustments to be made to the position of the tool.

The use of a cycloidal gear train also provides a high degree of mechanical advantage, allowing for precise control over the position of the tool even under high load conditions. This is particularly beneficial in cable processing operations, where the tool may need to exert significant force on the cable. The cycloidal gear train configuration also allows for a compact design, as the gears can be arranged in a relatively small space. This is beneficial in rotary cable processing machines, where space may be limited.

In a further preferred embodiment of the present invention, the first driving wheel, the second driving wheel and the coupling element are part of a strain wave gear train, wherein the first driving wheel is coupled to or configured as a circular spline, the second driving wheel is coupled to a wave generator and the coupling element is configured as a flex spline. The use of a strain wave gear train provides a highly precise and efficient mechanism for adjusting the position of the cable processing tool. The second driving wheel is operatively coupled to the wave generator, which interacts with the flex spline (the coupling element), which in turn interacts with the circular spline, that is coupled or corresponds to the first driving wheel. This arrangement allows for precise adjustments to be made to the position of the tool.

The use of a strain wave gear train also provides a high degree of mechanical advantage, allowing for precise control over the position of the tool even under high load conditions due to its high gear reduction ratio. This is particularly beneficial in cable processing operations, where the tool may need to exert significant force on the cable.

In yet another preferred embodiment of the present invention, the device further comprises at least one second cable processing tool and a second adjustment mechanism, wherein the first adjustment mechanism and the second adjustment mechanism are configured to translate angular position adjustments of the adjusting element in a first rotational direction relative to the first or second driving wheels starting from a neutral position into positional adjustments of the processing tools that are either maintaining the at least one first cable processing tool at its current distance from the longitudinal axis or moving it further away from the longitudinal axis and moving the at least one second cable processing tool towards the longitudinal axis, wherein the first adjustment mechanism and the second adjustment mechanism are further configured to translate angular position adjustments of the adjusting element in a second rotational direction relative to the first or second driving wheels, opposite to the first rotational direction, starting from the neutral position into positional adjustments of the processing tools that are moving the at least one first cable processing tool towards the longitudinal axis and either maintaining the at least one second cable processing tool at its current distance from the longitudinal axis or moving it further away from the longitudinal axis.

This configuration allows for the simultaneous adjustment of multiple cable processing tools in opposite directions, providing a high degree of flexibility and control in the cable processing operation. This is particularly beneficial in operations where multiple tools need to be adjusted simultaneously, such as in the processing of multicore cables or in operations where different tools are used for different stages of the cable processing operation.

In a further preferred embodiment of the present invention, the first cable processing tool and the second cable processing tool have different cutting or working planes perpendicular to the longitudinal axis. This arrangement allows for shorter sliding ways of the tools since the inactive tool must just be moved out of the working area to prevent possible collision with the cable. If the tools were arranged in a way that they would share the same cutting or working plane, the inactive tool would have to be moved out of the working area and out of the colliding area with the other tool, which usually increases the necessary sliding way of the tools, especially if there were more than two tools. Having different cutting or working planes for the different tools increases the efficiency of the cable processing operation, as multiple processing steps can be performed on the same processing machine while keeping the radial size of the cutting head as small as possible. Thus, by having different cutting or working planes for the different tools, the risk of interference or collision between the tools can be minimized even for different shapes of tools. This is particularly beneficial in operations where the tools need to be moved or adjusted frequently, as it allows for a greater degree of freedom in the positioning, movement and shapes of the tools.

In another preferred embodiment of the present invention, at least some of the cable processing tools are mounted translationally movable towards the longitudinal axis. This allows for the tools to be moved closer to or further away from the cable processing axis, providing a high degree of flexibility in the positioning of the tools. This is particularly beneficial in operations where the diameter or other dimensions of the cable being processed vary, as it allows for the tools to be easily adjusted to accommodate these variations. The ability to move the tools translationally towards the longitudinal axis also helps to ensure that the tools are always optimally positioned for the cable processing operation, which improves the quality and consistency of the processing results.

In a further preferred embodiment of the present invention, the translationally movable mounted tools are each operatively coupled to the adjusting element by a connecting rod. The connecting rod serves as a mechanical linkage between the adjusting element and the tool, allowing the position of the tool to be adjusted in response to movements of the adjusting element. This provides a simple and effective means of translating the rotational movements of the adjusting element into translational movements of the tool. The use of a connecting rod also allows for a high degree of mechanical advantage, enabling precise control over the position of the tool even under high load conditions. This is particularly beneficial in cable processing operations, where the tool may need to exert significant force on the cable. The connecting rod with their linkage can easily be designed to be robust and durable, ensuring reliable operation over extended periods of use.

In yet another preferred embodiment of the present invention, at least some of the cable processing tools are mounted pivotally movable towards the longitudinal axis. This allows for the tools to be pivoted closer to or further away from the cable processing axis, providing a high degree of flexibility in the positioning of the tools. This is particularly beneficial in operations where the diameter or other dimensions of the cable being processed vary, as it allows for the tools to be easily adjusted to accommodate these variations. The ability to pivot the tools towards the longitudinal axis also helps to ensure that the tools are always optimally positioned for the cable processing operation, which improves the quality and consistency of the processing results.

In another embodiment, the first driving wheel and/or the second driving wheel are toothed belt wheels (also called timing belt wheels). The use of toothed belt wheels provides a reliable and efficient means for driving these wheels. The teeth on the belt wheels engage with corresponding teeth on a belt or chain, ensuring a positive drive with minimal and limited slippage. This is particularly beneficial in cable processing operations, where precise control over the position of the tools is critical. The use of toothed belt wheels also allows for a compact and lightweight design, which is beneficial in rotary cable processing machines where space may be at a premium. Furthermore, toothed belt wheels are relatively simple to manufacture and install, reducing the complexity and cost of the tool position adjustment device.

In another embodiment, the at least one first cable processing tool and/or the at least one second cable processing tool can be cutting, stripping, crimping, centering, perforating, flaring, slitting, or shaping tools. These tools are commonly used in cable processing operations and can perform a variety of tasks. Cutting tools, for example, can be used to cut the cable to a desired length. Stripping tools can be used to remove insulation or other coverings from the cable. Crimping tools can be used to attach connectors or other components to the cable. Centering tools can be used to align the cable with other components or tools. Perforating tools can be used to perforate insulating sheets. Flaring tools can be used to flare parts of the cable. Flaring tools are usually used for the metallic shield of a coaxial cable to be further processed, like die cut, cut, brushed or bent. Slitting tools can be used to slit the insulation or split the cable along its length. Shaping tools can be used to form the cable into a desired shape or configuration. The ability to adjust the position of these tools allows for a high degree of flexibility in the cable processing operation, enabling a wide range of tasks to be performed.

In another embodiment, the at least one first cable processing tool and/or the at least one second cable processing tool are connected to a contact detection device for detecting contact between the tools and an electrical conducting part of a cable. The contact detection device can provide feedback to the control unit about the position of the tool relative to the cable, allowing for precise control over the tool's position and movement. This is particularly beneficial in operations where the tool needs to make contact with a specific part of the cable, such as when cutting or perforating a shielding foil without damaging the shield. The contact detection device also helps to prevent damage to the cable or the tool by alerting the control unit if the tool comes into contact with an unintended part of the cable as for instance the center conductor of a coaxial cable. This improves the quality and consistency of the cable processing operation, while also extending the lifespan of the tools.

In a further preferred embodiment, the device comprises a first motor coupled to the first driving wheel and/or a second motor coupled to the second driving wheel. The motors provide the driving force for the rotation of the driving wheels, which in turn drive the adjusting element and the cable processing tools. The use of separate motors for each driving wheel allows for independent control of the rotation of each wheel, providing a high degree of flexibility in the operation of the device. The motors can be any suitable type of motor, such as electric motors, hydraulic motors, or pneumatic motors, and can be controlled by the control unit to provide precise control over the position and movement of the tools.

In yet another embodiment, the device comprises electronic means for controlling the angular speed and/or angular position of the first driving wheel and of the second driving wheel. These electronic means can include, for example, motor controllers, rotary encoder or other sensors, and associated control software. The motor controllers can regulate the power supplied to the motors, thereby controlling the angular position and/or the speed at which the motors, and hence the driving wheels, rotate. The sensors can monitor the actual speed and/or angular position of the driving wheels and provide feedback to the motor controllers, allowing for precise control over the speed and/or angular position of the driving wheels. The control software can coordinate the operation of the motor controllers and sensors, and can implement control algorithms to achieve the desired speed and/or angular position of the driving wheels. This precise control over the relative angular position of the driving wheels to each other allows for precise control over the position and movement of the cable processing tools, which improves the quality and consistency of the cable processing operation.

The invention relates in a second aspect to a rotary cable processing machine that includes a tool position adjustment device according to the present invention. The rotary cable processing machine can be any type of machine that processes cables in a rotary manner, such as a machine for cutting, stripping, crimping, centering, perforating, slitting, or shaping cables. The tool position adjustment device can be integrated into the rotary cable processing machine to provide precise control over the position of the cable processing tools. This improves the quality and consistency of the cable processing operation, while also reducing the risk of damage to the cable or the tools.

In a further aspect, the device of the present invention can be used in a method for processing, perforating, incising, and/or cutting through a specific layer of a multi-layer cable, wherein the angular position of the first and/or second processing tool as well as their distance to the longitudinal axis is measured, controlled, and regulated, wherein the first and/or second processing tools are used as scanning tool and in a first method step, the specific layer is scanned in order to determine its contour and to derive tool feed commands therefrom, and wherein in a second method step, the scanning tool is fed according to the tool feed commands, so that the specific layer, regardless of its spatial position with respect to the cable's longitudinal axis, but depending on the scanned contour of the specific layer, is processed, perforated, cut or cut through. In a particular embodiment, the radius of the specific layer is described as a function of the angular position of the scanning tool.

Advantageously, the first method step is performed by a rolling cutting movement, in that the scanning tool is designed as a scanning roller tool, which is equipped to cut into outer layer(s) of the multi-layer cable and subsequently or during the cutting process to scan the underlying specific layer.

### Brief description of the drawings

- Figure 1 shows a perspective view of a device according to a first embodiment of the present invention;
- Figure 2 shows a first sectional perspective view of a device according to the first embodiment of the present invention;
- Figure 3 shows a second sectional perspective view of a device according to the first embodiment of the present invention;
- Figure 4 shows a perspective view of the speed reducer of a device according to the first embodiment of the present invention;
- Figure 5 shows a perspective view of a device according to a second embodiment of the present invention;
- Figure 6 shows a sectional perspective view of a device according to the second embodiment of the present invention;
- Figure 7 shows a frontal perspective view of the speed reducer of a device according to the second embodiment of the present invention;
- Figure 8 shows a detailed perspective view of the speed reducer of a device according to the second embodiment of the present invention;
- Figure 9 shows a frontal view of the speed reducer of a device according to the second embodiment of the present invention;
- Figure 10 shows a sectional perspective view of a device according to the third embodiment of the present invention;
- Figure 11 shows a rear view of the speed reducer of a device according to the third embodiment of the present invention;
- Figure 12 shows a sectional perspective view of the speed reducer of a device according to the third embodiment of the present invention;
- Figures 13-16 present a first embodiment of a cam slot mechanism; and
- Figure 17 presents a second embodiment of a cam slot mechanism.

### Detailed description of preferred embodiments

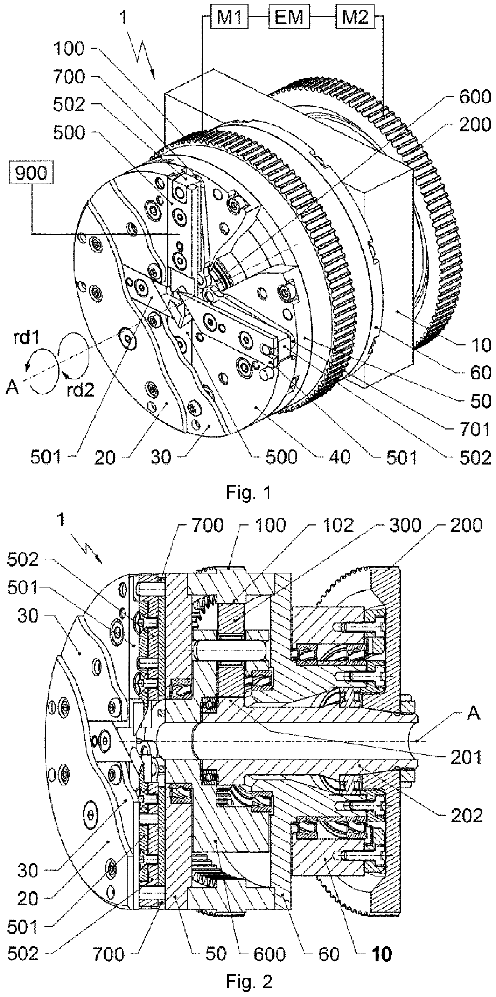

Figures 1 and 2 present perspective views of a tool position adjustment device 1 for rotary cable processing machines according to a first preferred embodiment of the present invention. In these figures, certain components are only partially shown to reveal underlying elements. Device 1 comprises a first driving wheel 100 and a second driving wheel 200, both rotatably mounted to the bearing block 10 of the rotary cable processing machine by means of bearing flange 60 and coaxially aligned along the longitudinal axis A, which serves as the cable processing axis. The driving wheels 100 and 200 are configured as toothed belt wheels. As illustrated in Figure 1, each driving wheel 100 and 200 is connected to a motor, M1 and M2 respectively, with each motor driving its corresponding wheel. Additionally, electronic means EM are provided to control the motors M1 and M2, facilitating the adjustment of the angular position and/or speed of the driving wheels 100 and 200.

As will be elaborated in greater detail below, the driving wheels 100 and 200 are operatively coupled to the processing tools 500 and 501, such that any change in the relative angular position between the first driving wheel 100 and the second driving wheel 200 results in an adjustment of the position of the processing tools 500 and/or 501 relative to axis A. In the specific embodiment depicted in Figures 1 through 4, two sets of processing tools are incorporated.

As particularly illustrated in Figure 1, the processing tools 500 and 501 are mounted on tool carriers 502, which are connected to an adjusting element 600 via connecting rods 700. This configuration allows the processing tools 500 and 501 to be translationally moved toward or away from axis A upon a change in the relative angular position between the first driving wheel 100 and the second driving wheel 200 and a resulting angular adjustment of the adjusting element 600 relative to the first wheel 100. In this embodiment, the translation axes of the processing tools are radially oriented. However, it is important to note that in other embodiments, the translational axes could be oriented differently, such as tangentially to a circle coaxial with axis A. Furthermore, in other embodiments, the tools can also be pivotally mounted for their positional adjustments with respect to axis A.

Device 1 also includes a second cover plate 20 (partially shown) designed to prevent movements of the second processing tools 501 along axis A and to prevent dust from entering the device. Additionally, a first cover plate 30 (partially shown) is provided to cover the first set of processing tools 500, to guide the translational movements of the second processing tools 501 and to prevent movements of the first processing tools 500 along axis A. Four guiding plates 40 (one is not shown) are also included to assist in the translation of the tool carriers 502 and processing tools 500 and 501. The cover plates 20 and 30, along with the guiding plates 40, are all mounted to a gearbox flange 50 (partially shown), which is attached to the first driving wheel 100.

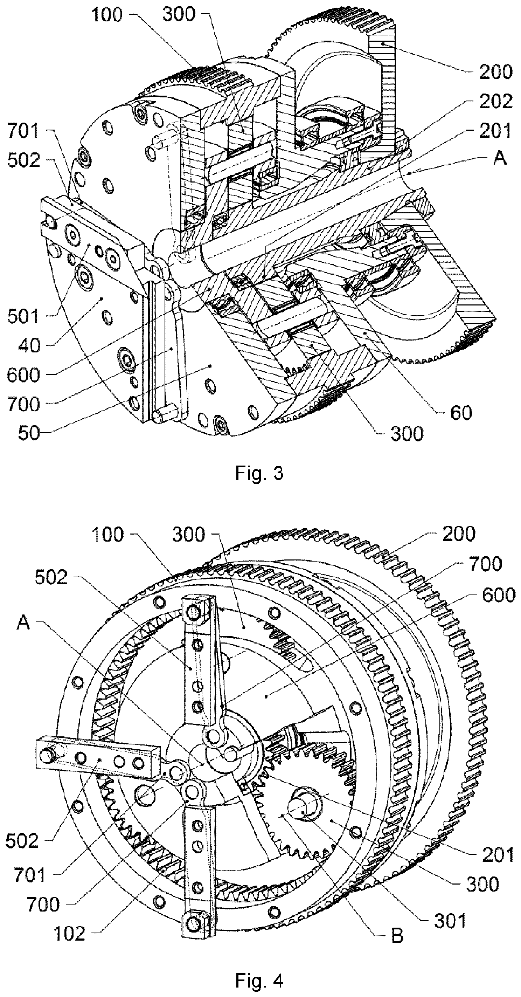

As illustrated in Figures 3 and 4, where certain elements have been omitted to clarify the working principle of device 1, the first driving wheel 100 features internal toothing 102 that engages with the toothing of three planet gears 300 angularly evenly distributed around axis A and held by a planet carrier coupled to the adjusting element 600. Planet carrier and adjusting element 600 can be designed as one part as shown here or as separate parts. The planet gears also engage with the toothing of a sun gear 201, which is operatively coupled to the second driving wheel 200 via an input shaft 202. Consequently, the first driving wheel 100 with its internal toothing 102, planet gears 300, and second driving wheel 200, along with the sun gear 201 form a planetary gear train that functions as a differential speed reducer. The speed difference between the first driving wheel 100 and the second driving wheel 200 is reduced and superimposed to the speed of the first driving wheel 100 and output via the adjusting element 600.

As long as the first driving wheel 100 and the second driving wheel 200 rotate at the same angular speed, the planet gears 300 exhibit a purely orbital movement around axis A, meaning they do not rotate around their own planet gear axes B. Since the planet gears 300 are operatively coupled to the adjusting element 600 via the planet gear axels 301, the adjusting element 600 is driven to rotate at the same angular speed as the first and second driving wheels 100 and 200. Consequently, the position of the processing tools 500 and 501 with respect to axis A remains unchanged.

Upon a change in the relative angular position between the first and second driving wheels 100 and 200, the planetary gears 300 are induced to rotate around their own axes B. This rotation results in an increase or decrease in their orbital speed, depending on the relative angular speed between the driving wheels 100 and 200, and consequently alters the angular speed of the adjusting element 600 relative to the first driving wheel 100 and gearbox flange 50 and thus induces a change in the position of the tools. As the driving wheels 100 and 200, along with the planetary gears 300, form a differential speed reducer, the relative angular speed of the adjusting element 600 to the first driving wheel 100 and gear box flange 50 is a fraction of the relative angular speed difference between the first and second driving wheels 100 and 200. The speed reduction ratio is determined by the ratio of the number of teeth on the ring gear (internal toothing 102 of the first driving wheel 100) to the number of teeth on the sun gear 201. This configuration allows for highly precise adjustments of the position of the processing tools by reducing inaccuracies of the controlled angular positions of the motors and therefore of the driving wheels. Additionally, the system provides a higher torque, which increases proportionally to the reduction in speed, enabling the tools to exert greater force during processing operations. This capability is particularly advantageous when dealing with cables that require substantial cutting forces, as it ensures that the tools can perform their tasks effectively without compromising precision. The enhanced torque availability contributes to improved performance and operational efficiency, enabling the machine to handle a wider range of cable processing tasks with greater reliability and consistency.

The processing tools 500 and 501 are linked to the adjusting element 600 via connecting rods 700 and 701. These connecting rods are linked to the adjusting element 600 in such a way that starting from a neutral position when the adjusting element undergoes a relative angular position change towards the first driving wheel 100 in a first direction rd1, the first processing tools 500 are moved further away from axis A while the second processing tools 501 are moved towards axis A. Conversely, when the adjusting element moves in the (opposite) second direction rd2, the first processing tools 500 are moved towards axis A, and the second processing tools 501 are moved further away from axis A.

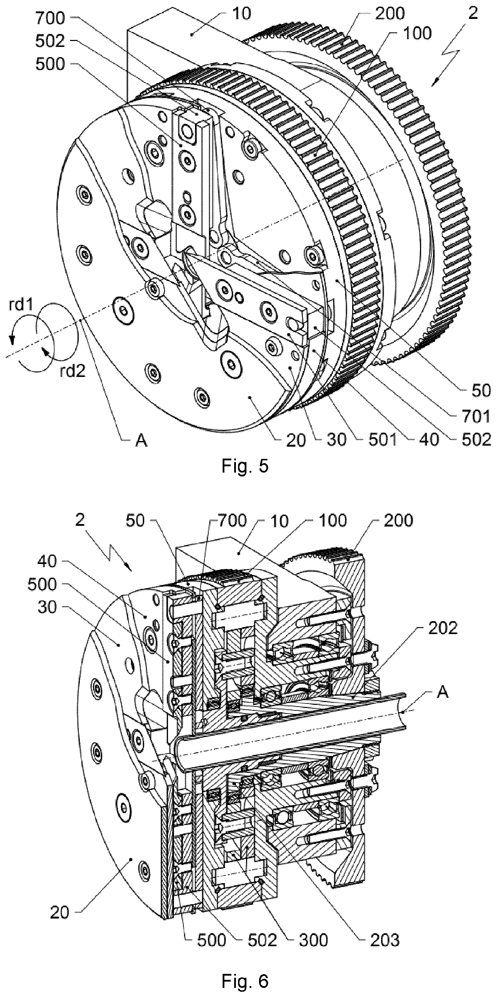

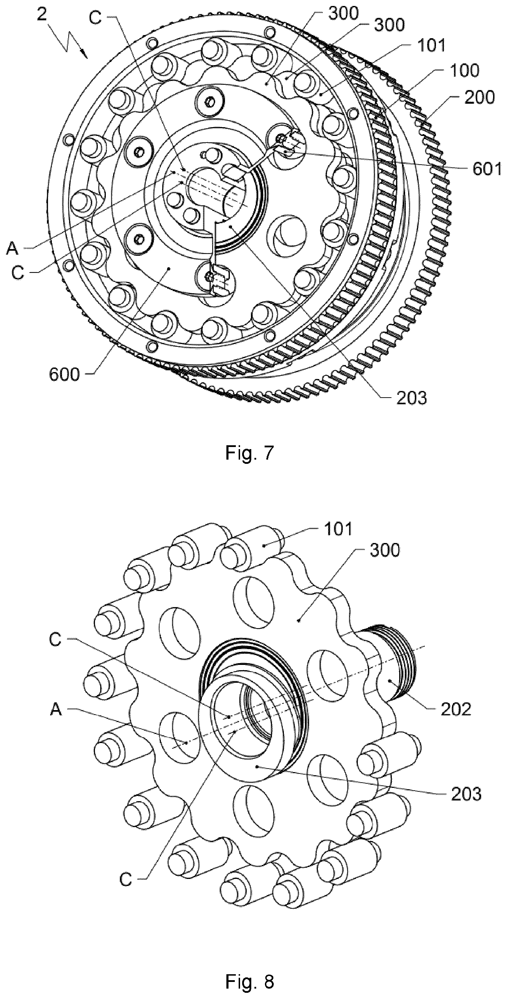

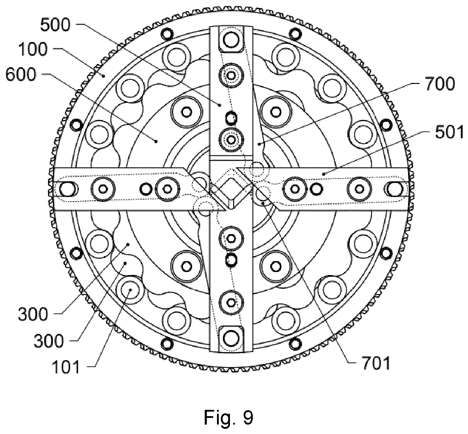

Figures 5 to 9 present views of a tool position adjustment device 2 for rotary cable processing machines according to a second preferred embodiment of the present invention. Same elements as in the embodiment of Figures 1 to 4 carry the same reference numbers. The main difference between the first and second embodiment is that, in contrast to first embodiment, in the second embodiment, the first driving wheel 100, the coupling element 300 and the second driving wheel 200 are part of a cycloidal gear train as illustrated in Figure 7. For that, the first driving wheel 100 comprises ring pins 101, and the coupling elements 300 are configured as cycloidal discs. It is important to note that while two discs 300 are presented in the second embodiment, it is possible to have only one disc. The advantage of having two or more discs is to provide a symmetrical arrangement, in terms of load and mass distribution, which leads to smoother running and longer service life. In order to drive the cycloidal discs 300 in their typical eccentric rotation around axis A, an eccentric 203 is provided on the input shaft 202 (see Figure 8). The adjusting element 600 is operatively coupled to the cycloidal discs 300 by means of output pins 601 that engage in apertures provided in discs 300.

Similar to the first embodiment, when the first driving wheel 100 and the second driving wheel 200 rotate at the same angular speed, the cycloidal discs 300 exhibit a purely orbital movement around axis A, meaning they do not rotate around their own axes C (see Figures 7 and 8). Since the cycloidal discs 300 are operatively coupled to the adjusting element 600 via output pins 601, the adjusting element 600 is driven to rotate at the same angular speed as the first and second driving wheels 100 and 200. Consequently, the position of the processing tools 500 and 501 remains unchanged.

When there is a change in the relative angular position between the first and second driving wheels 100 and 200, the cycloidal discs 300 are induced to rotate around their own axes C. This rotation alters the angular position of the adjusting element 600 relative to the first driving wheel 100 and gearbox flange 50 and thus induces a change in the position of tools.

As the driving wheels 100 and 200, along with the cycloidal discs 300, form a speed reducer of the speed difference between the first and second driving wheels 100 and 200, the relative angular speed between the adjusting element 600 and the gear box flange 50 is a fraction of the relative angular speed difference between the first and second driving wheels. In the present case, the relative speed reduction ratio is equal to the number of cycloidal disc lobes. This configuration allows also for highly precise adjustments of the position of the processing tools, and it also compensates for minor fluctuations in the angular speeds of the driving wheels. Additionally, the system provides a higher torque between the adjusting element 600 and the gear box flange 50, which increases proportionally to the reduction in relative speed between the driving wheels 100 and 200, enabling the tools to exert greater force during processing operations. This capability is particularly advantageous when dealing with cables that require substantial cutting forces, as it ensures that the tools can perform their tasks effectively without compromising precision. The enhanced torque availability contributes to improved performance and operational efficiency, enabling the machine to handle a wider range of cable processing tasks with greater reliability and consistency.

Here also, the processing tools 500 and 501 are linked to the adjusting element 600 via connecting rods 700 and 701. These connecting rods are linked to the adjusting element 600 in such a way that when the adjusting element undergoes a relative angular position change relative to the first driving wheel 100 in a first rotational direction rd1, the first processing tools 500 are moved further away from axis A while the second processing tools 501 are moved towards axis A. Conversely, when the adjusting element moves in the opposite direction rd2, the first processing tools 500 are moved towards axis A, and the second processing tools 501 are moved away from axis A.

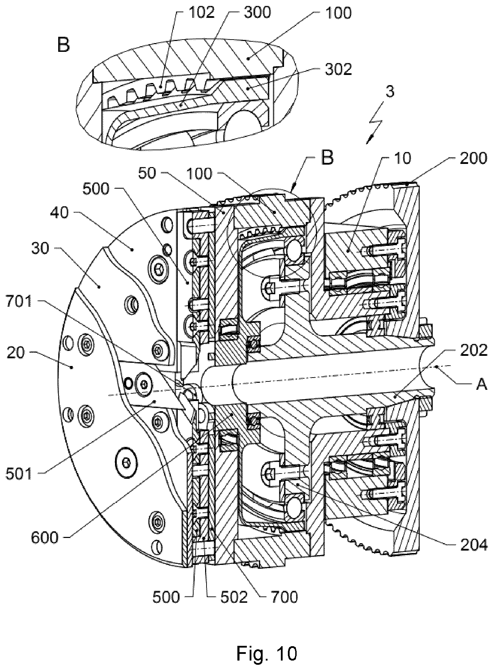

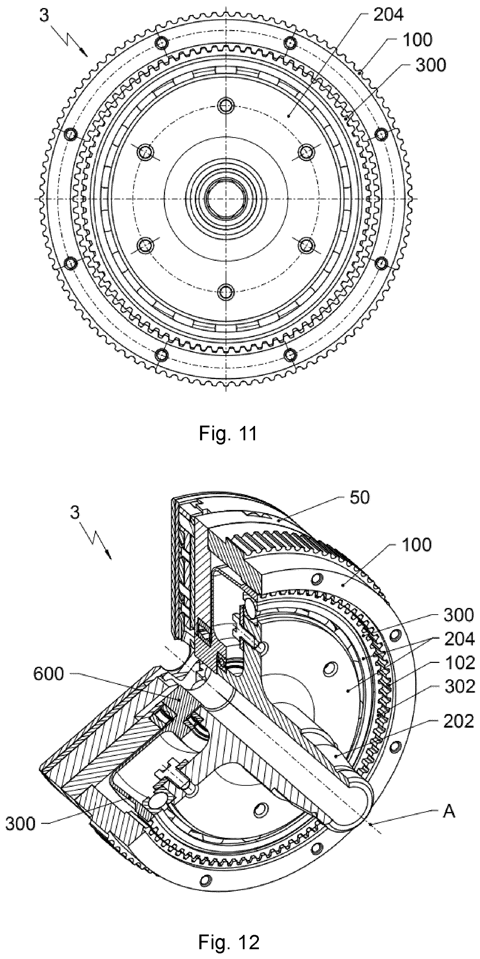

Figures 10 to 12 present views of a tool position adjustment device 3 for rotary cable processing machines according to a third preferred embodiment of the present invention. Same elements as in the embodiment of the preceding Figures carry the same reference numbers. The main difference between the third embodiment and the first and second embodiments is that the first driving wheel 100, the coupling element 300 and the second driving wheel 200 are part of a strain wave gear train as illustrated in Figure 10. For that, the first driving wheel 100 is acting as a circular spline that comprises internal toothing 102 (see detailed view in Figure 10) and the coupling element 300 is configured as a flex spline with external toothing 302. In this particular embodiment, the flex spline 300 and the adjusting element 600 are integrated into a single component. However, they could be configured as two distinct parts, as demonstrated in the other two embodiments described earlier. In order to deform the flex spline 300 such that its external teeth 302 engage with those of the circular spline 100, an elliptic wave generator 204 is provided on the input shaft 202 (see Figure 11). Because the flex spline 300 and circular spline 100 have a slightly different number of teeth, each full rotation of the wave generator causes a small relative rotation of the flex spline 300 relative to the circular spline 100.

Similar to the first and second embodiments, when the first driving wheel 100 and the second driving wheel 200 rotate at the same angular speed, the engagement of the flex spline 300 with the internal toothing of the circular spline 100 remains constant. Since the flex spline 300 is integrally formed with the adjusting element 600, the adjusting element 600 likewise rotates at the same angular speed as the first and second driving wheels 100 and 200. As a result, the position of the processing tools 500 and 501 remains unchanged.

When there is a change in the relative angular position between the first and second driving wheels 100 and 200, a corresponding change is induced in the engagement of the flex spline 300 with the internal toothing of the circular spline. This altered engagement results in a change in the rotational speed of the flex spline 300 (and thus of the integrally formed adjusting element 600) relative to the first driving wheel 100 and gearbox flange 50 and thus induces a change in tools position.

As the driving wheels 100 and 200, along with the flex spline 300, form a speed reducer, the change in angular speed of the adjusting element 600 is a fraction of the relative angular speed adjustment between the first and second driving wheels. The speed reduction ratio is calculated by dividing the difference in the number of teeth between the flex spline 300 and the circular spline 100 by the number of teeth of the flex spline 300. This configuration allows also for highly precise adjustments of the position of the processing tools 500,501, and it also compensates for minor differences in the angular speeds of the driving wheels. Additionally, the system provides a higher torque, which increases proportionally to the reduction in speed, enabling the tools to exert greater force during processing operations. This capability is particularly advantageous when dealing with cables that require substantial cutting forces, as it ensures that the tools can perform their tasks effectively without compromising precision. The enhanced torque availability contributes to improved performance and operational efficiency, enabling the machine to handle a wider range of cable processing tasks with greater reliability and consistency.

Here also, the processing tools 500 and 501 are linked to the adjusting element 600 via connecting rods 700 and 701. These connecting rods are linked to the adjusting element 600 in such a way that when the adjusting element undergoes a relative angular position change toward the first driving wheel 100 in one direction, the first processing tools 500 are moved toward axis A while the second processing tools 501 are moved away from axis A. Conversely, when the adjusting element moves in the opposite direction, the first processing tools 500 are moved away from axis A, and the second processing tools 501 are moved toward axis A.

In the preceding descriptions, processing tools are connected to the adjusting element via connecting rods, but other mechanical arrangements are conceivable. Instead of rods, the adjusting element or an attached component could serve as a cam with slots that engage with pins or rollers on tool carriers, facilitating their translational movement.

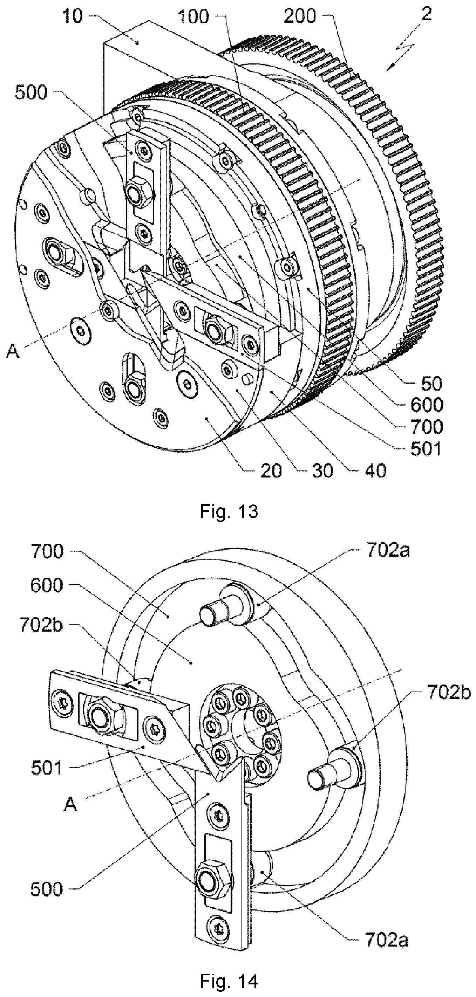

Figures 13-17 depict two alternative cam slot mechanisms. Figure 13 shows such a mechanism integrated into device 2, where the first driving wheel 100, coupling element 300, and second driving wheel 200 form part of a cycloidal gear train. It's however important to note that these cam slot mechanisms can generally replace the connecting rod mechanism previously detailed.

Figures 14-16 provide more detail on one embodiment of the cam slot mechanism, which includes a cam slot disc 600 featuring a cam slot 700. The cam slot has sections with a constant radius relative to axis A and sections with varying radii that converge at saddle points closest to axis A. Pairs of first and second cam slot pins or cam followers 702a, 702b are positioned within the cam slot 700, coupled to first and second processing tools 500 and 501, respectively. As it will become clear below, the cam slot disc 600 represents here the adjusting element coupled to the coupling element 300 of the speed reducer and the cam slot 700 represents the adjustment mechanism that allows to translate an angular position adjustment of cam slot disc 600 into a translational position adjustment of the tools 500, 501.

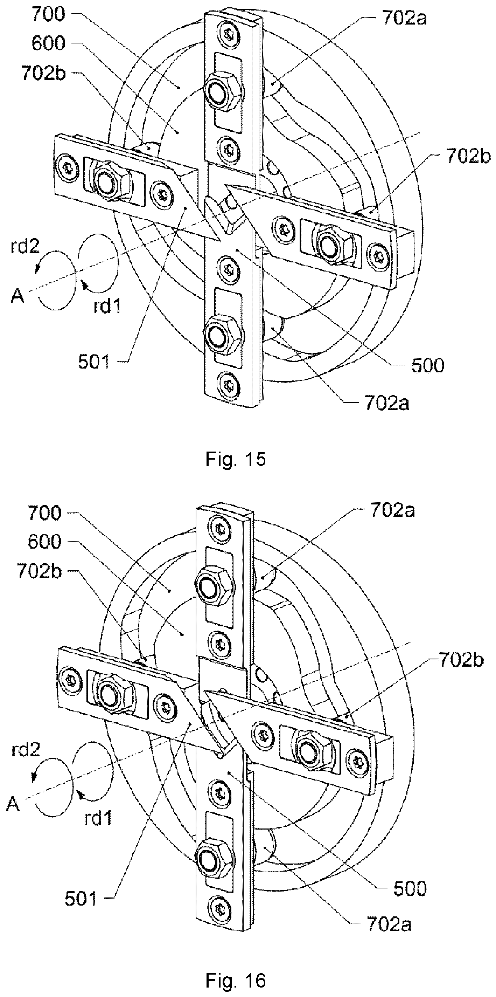

Figure 14 illustrates one of the neutral positions of the cam slot disc 600. In this neutral position, both tools 500 and 501 are positioned at their maximum distance from axis A. Upon angular adjustment of cam slot disc 600 from this position in the second rotational direction rd2, as illustrated in Figure 15, the second cam followers 702b remain within the constant radius section, keeping the distance of the second cable processing tools 501 relative to axis A unchanged. Simultaneously, the first cam followers 702a move along the cam slot sections with decreasing radii to axis A, pushing the first cable processing tools 500 towards axis A. The opposite happens upon an angular adjustment of cam slot disc 600 from the neural position in the first rotational direction rd1 as illustrated in Figure 16.

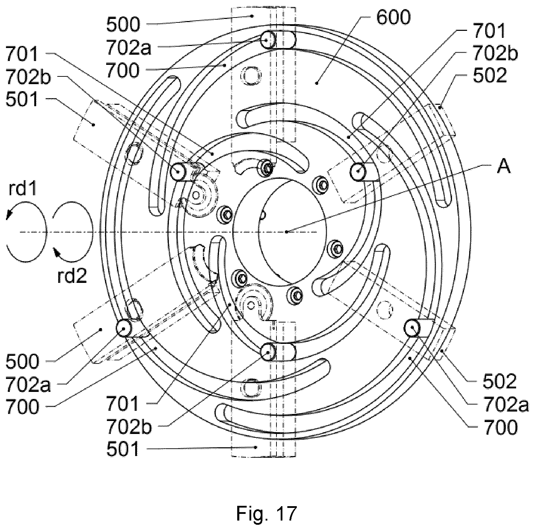

Figure 17 presents an alternative cam slot mechanism embodiment where the second processing tools 501 are rolling tools. In this design, cam slot disc 600 incorporates a set of first cam slots 700 and a set of second cam slots 701 with corresponding first cam slot pins 702a and second cam slot pins 702b connected to the first processing tools 500 and to the second processing tools 501, respectively. Figure 17 presents the cam slot disc 600 in its neutral position where both tools 500 and 501 are positioned at their maximum distance from axis A.

Each slot 700, 701 comprises a constant radius section and sections with diminishing radii relative to axis A. Notably, the diminishing radius sections of the first cam slot 700 and of the second cam slot 701 have opposite spiral pitches. Consequently, upon an angular adjustment of cam disc 600 in the first rotational direction rd1, the first cam slot pins 702a and the first processing tools 500 maintain their distance from axis A, while the second cam slot pins 702b and the second processing tools 501 move closer to it. Conversely, angular adjustment of cam disc 600 in opposite second rotational direction rd2 results in the opposite movement: the first processing tools 500 moves towards axis A, and the second processing tools 501 remain at their distance to axis A.

It has to be noted that in all embodiments of Figures 13 to 17 the cam slots can be replaced by cam grooves.

Finally, in devices 1, 2 ,3, a contact detection device 900 for detecting contact between at least one of the tools 500, 501 and an electrical conducting part of the cable can be provided in all embodiments.

### Parts list:

1, 2, 3: device according to preferred embodiments of the present invention
10: bearing block
20: second cover plate
30: first cover plate
40: guiding plate
50: gearbox flange
60: bearing flange
100: first driving wheel
101: ring pins, rollers
102: internal toothing
200: second driving wheel
201: sun gear
202: input shaft
203: eccentric
204: wave generator
300: coupling element, planet gear, cycloidal disc, flex spline
301: planet gear axel
302: external toothing
500: first processing tools
501: second processing tools
502: tool carriers
600: adjusting element, cam slot disc
601: output pins
700: first adjustment mechanism, first connecting rod, first cam slots
701: second adjustment mechanism, second connecting rod, second cam slots
702a: First cam slot pins, cam followers, cam rollers
702b: Second cam slot pins, cam followers, cam rollers
A: longitudinal axis
B: planet gear axis
C: cycloidal disc axis
M1: first motor
M2: second motor
EM: electronic means
900: contact detection means
rd1: first rotational direction
rd2: second rotational direction

## Claims

1. A tool position adjustment device (1, 2, 3) for rotary cable processing machines, comprising:
• a first driving wheel (100) and a second driving wheel (200) rotatably-mounted and coaxially arranged along a longitudinal axis (A) that serves as cable processing axis of a rotary cable processing machine, wherein the first driving wheel (100) and the second driving wheel (200) are operatively coupled to each other via a coupling element (300) to form a speed reducer of the difference in angular speed of said first and second driving wheels (100, 200), and wherein said first and second driving wheels (100, 200) are angularly adjustable relative to each other about said longitudinal axis (A);
• an adjusting element (600) coaxially arranged along the longitudinal axis (A) and operatively coupled:
• to the coupling element (300) such that a change in the relative angular position between the first driving wheel and the second driving wheel (100, 200) results in an angular position adjustment of the adjusting element (600) relative to the first or second driving wheels (100, 200); and
• to a first adjustment mechanism (700) adapted to translate angular position adjustments of the adjusting element (600) into positional adjustments of at least one first cable processing tool (500) with respects to the longitudinal axis (A).

2. Device (1) according to claim 1, wherein the first driving wheel (100), the second driving wheel (200) and the coupling element (300) are part of a planetary gear train, wherein the first driving wheel (100) is coupled to or configured as a ring gear, the second driving wheel (200) is coupled to a sun gear (201) and the coupling element (300) is configured as a planet gear.

3. Device (2) according to claim 1, wherein the first driving wheel (100), the second driving wheel (200) and the coupling element (300) are part of a cycloidal gear train, wherein the first driving wheel (100) is coupled to or configured as a ring gear, advantageously comprising ring pins or rollers (101), the second driving wheel (200) is coupled to an eccentric (203) and the coupling element (300) is configured as a cycloidal disc (300).

4. Device (3) according to claim 1, wherein the first driving wheel (100), the second driving wheel (200) and the coupling element (300) are part of a strain wave gear train, wherein the first driving wheel (100) is coupled to or configured as a circular spline, the second driving wheel (200) is coupled to a wave generator (204) and the coupling element (300) is configured as a flex spline.

5. Device (1, 2 ,3) according to any one of the preceding claims further comprising at least one second cable processing tool (501) and a second adjustment mechanism (701), wherein the first adjustment mechanism (700) and the second adjustment mechanism (701) are configured to translate angular position adjustments of the adjusting element (600) in a first rotational direction (rd1) relative to the first or second driving wheels (100, 200) starting from a neutral position into positional adjustments of the processing tools that are:
• either maintaining the at least one first cable processing tool (500) at its current distance from the longitudinal axis (A) or moving it further away from the longitudinal axis (A); and
• moving the at least one second cable processing tool (501) towards the longitudinal axis (A); and
wherein the first adjustment mechanism (700) and the second adjustment mechanism (701) are further configured to translate angular position adjustments of the adjusting element (600) in a second rotational direction (rd2) relative to the first or second driving wheels (100, 200), opposite to the first rotational direction, starting from the neutral position into positional adjustments of the processing tools that are:
• moving the at least one first cable processing tool (500) towards the longitudinal axis (A); and
• either maintaining the at least one second cable processing tool (501) at its current distance from the longitudinal axis (A) or moving it further away from the longitudinal axis (A).

6. Device (1, 2 ,3) according to claim 5, wherein the first cable processing tool (500) and the second cable processing tool (501) have different cutting or working planes perpendicular to the longitudinal axis.

7. Device (1, 2 ,3) according to any one of the preceding claims, wherein at least some of the cable processing tools (500, 501) are mounted translationally movable towards the longitudinal axis (A).

8. Device (1, 2 ,3) according to claim 7, wherein the translationally movable mounted tools are each operatively coupled to the adjusting element (600) by a connecting rod (700, 701).

9. Device (1, 2 ,3) according to any one of the preceding claims, wherein at least some of the cable processing tools (500, 501) are mounted pivotally movable towards the longitudinal axis (A).

10. Device (1, 2 ,3) according to any one of the preceding claims, wherein the first driving wheel (100) and/or the second driving wheel (200) are toothed belt wheels.

11. Device (1, 2 ,3) according to any one of the preceding claims, wherein the at least one first cable processing tool (500) and/or the at least one second cable processing tool (501) are cutting, stripping, crimping, centering, perforating, flaring, slitting or shaping tools.

12. Device (1, 2 ,3) according to any one of the preceding claims, wherein the at least one first cable processing tool (500) and/or the at least one second cable processing tool (501) are connected to a contact detection device (900) for detecting contact between the tools and an electrical conducting part of a cable.

13. Device (1, 2 ,3) according to any one of the preceding claims, comprising a first motor (M1) coupled to the first driving wheel (100) and/or a second motor (M2) coupled to the second driving wheel (200).

14. Device (1, 2 ,3) according to any one of the preceding claims, comprising electronic means (EM) for controlling the angular speed and/or angular position of the first driving wheel (100) and of the second driving wheel (200).

15. A rotary cable processing machine comprising a tool position adjustment device (1) according to any one of the claims 1 to 14.
